# EUROPEAN PATENT SPECIFICATION

(11) **EP 4 086 196 B1**
(45) Date of publication and mention of the grant of the patent: **03.07.2024**
(21) Application number: 22168960.7
(22) Date of filing: 20.04.2022
(51) Int. Cl.: B65F 1/02, B65F 1/12, B66F 9/19, B65F 1/14, B60P 1/48, B65D 90/00

(54) **COLLAPSIBLE COUPLING DEVICE FOR ROLL-OFF CONTAINERS**
ZUSAMMENKLAPPBARE KUPPLUNGSVORRICHTUNG FÜR ABROLLCONTAINER
DISPOSITIF D'ACCOUPLEMENT REPLIABLE POUR CONTENEURS ROULANTS

(30) Priority: 07.05.2021 IT 202100011771
(43) Date of publication of application: 09.11.2022
(73) Proprietor: B.T.E. S.p.A., 25080 Paitone (BS) (IT)
(72) Inventor: CORSINI, Omar, 25021 BAGNOLO MELLA (BRESCIA) (IT); MASSARDI, Venanzio, 25080 NUVOLENTO (BRESCIA) (IT)
(74) Representative: Tansini, Elio Fabrizio

(56) References cited:
- WO-A1-87/05887
- DE-U1-202007 015 922
- DE-U1-202018 101 513

## Description

This invention concerns a collapsible coupling device for roll-off containers, especially suited for engaging with a mechanical arm or another loading device installed on a vehicle. The invention also provides a roll-off container provided with the above-mentioned coupling device.

Examples of roll-off containers are described in DE202018101513U1 and WO8705887A1. DE202018101513U1 discloses a collapsible coupling device for roll-off containers according to the pre-amble of claim 1.

The subject of this invention is particularly intended for the waste disposal sector and, in particular, the separate collection of the same with the aid of roll-off containers that are potentially equipped with a compaction system.

For the purposes of waste collection, the use of roll-off containers that, positioned in recycling stations and near other collection sites, serve to receive the waste deposited by citizens and/or collection service staff is known. These containers may be equipped with a compaction system that, with the aid of moveable pushers that are normally driven by hydraulic actuators, serve to act on the accumulated waste on the bottom of a loading chamber placed at the front end of the container itself, to push it into a storage chamber wherein the waste is compacted so as to increase its loading capacity. Containers arranged thus are commonly called "roll-off compactors". Once filled, the container is raised onto the flatbed of a vehicle in order to transport the waste to other processing sites. To this end, at one front end of the container, there is a coupling member, structured and positioned in a suitable way for engagement by an arm or other loading device installed on the transport vehicle.

In many applications, it is required that the coupling member may be lowered to free space in front of the front wall of the container so as to facilitate the disposal of waste in the loading chamber before any opening of access doors that may be present on the front wall itself. To this end, the coupling member is hinged so it can rotate in relation to the frame or other supporting structure of the roll-off container, so it can be shifted, with a rotation about its horizontal pivoting axis, between a rest position in which it is lowered, and a work position in which it is raised. In the rest position, the coupling member extends vertically below the load threshold of the loading chamber, freeing up the space in front of the inlet opening of the chamber itself, so as to facilitate access to the same and the introduction of waste. When the container needs to be loaded on a vehicle, the coupling member is manually moved and blocked in the work position, wherein it projects from the front wall above the load threshold.

In some applications, there is a need to lower the load threshold level in the loading chamber, for example to facilitate the pouring of waste inside of it and/or to lower the bottom of the loading chamber itself, for example for increasing the load capacity of a loading hopper above it. However, the applicant has noted that lowering the load threshold and/or the bottom wall entails a significant increase in the size and weight of the coupling member. In fact, since the gripping level of the coupling member in the work position must remain constant, one is forced to lower the hinging point of the coupling member and, as a result, lengthen the arms, increasing, as a result, the weight thereof. This circumstance can lead to an excessive increase in the weight of the hook, so as to make it prohibitionary for an operator to raise it manually.

The purpose of this invention is to overcome the limits of the prior art, by proposing technical measures that, without requiring installation of complex motorised servo systems, makes it possible to minimise the force required to the operator to manually raise the coupling member. These purposes and others, which will appear more clearly in the course of the following description, are basically achieved with a collapsible coupling device for roll-off containers, comprising: a coupling member suitable to be rotatably engaged with respect to a supporting structure of a roll-off container, and movable around a horizontal hinging axis between a rest position in which it is lowered and a work position in which it is raised; a pusher device suitable to be operating between the supporting structure and the coupling member to push the latter towards the work position.

In accordance with an additional aspect, the invention concerns a roll-off container equipped with said collapsible coupling device.

The adoption of the pusher device makes it possible to significantly mitigate the manual force required for raising the coupling member. Thus, it is also possible, when needed, to lower the load threshold of the loading chamber and/or to totally lower the latter, without the consequent increase in size and weight of the coupling member impeding the manual handling thereof into a work position.

In at least one of the above-mentioned aspects, one or more convenient embodiments of the invention may also comprise at least one of the following preferential features.

The pusher device preferably comprises an elastic element.

The raising of the coupling member lends itself, therefore, to being facilitated without resorting to complex motorised systems, favouring its structural simplification and a reduction in costs.

The elastic element preferably comprises a gas spring.

The pusher device preferably operates on an idler lever mechanism suitable to be operationally bound between the coupling member and the supporting structure.

The idler lever mechanism is preferably configured to transmit a lifting force to the coupling member, upon action of the pusher device, not exceeding a lowering force determined by the weight of the coupling member.

In this way, the spontaneous parking of the coupling element in the rest position is preserved, despite the action exerted by the pusher device. The action of the pusher device will make it possible to mitigate the force necessary to raise the coupling element towards the work position, without, in any case, provoking dangerous, spontaneous movements of the coupling element itself from the rest position.

The idler lever mechanism preferably comprises a pair of levers attached to each other around an articulation axis.

Said pair of levers preferably comprises a first lever bound to the supporting structure, and a second lever bound to the coupling member.

The use of a pair of levers simplifies obtaining a high angular excursion, if needed, even above 180°, for the purposes of moving the coupling member from the rest position to the gripping position.

At least one of the levers of the thrust lever mechanism preferably has an arched development.

The levers may be arranged around the hinging pin without interfering with it in the work position.

The pusher device preferably operates at the articulation axis.

Upon reaching the rest position of the coupling member, the articulation axis preferably passes across an alignment direction between an attachment axis of the pusher device on the supporting structure and a pivoting axis of the first lever on the supporting structure.

It is, therefore, possible to restrain the coupling member in the rest position on the action of the elastic element.

At least during the moving of the coupling member between the rest position and the work position, the articulation axis preferably reaches a maximum distance from the alignment direction when the coupling member brings its centre of gravity in basic horizontal alignment with respect to the hinging axis.

It is, therefore, possible to gradually modulate the effect of the action of the elastic element, maximising it when the force required for raising the coupling member to the work position is at its maximum.

The coupling member is preferably hinged at in recycling least one fastening bracket that is integral with the supporting structure.

The coupling member is preferably hinged close to a load threshold, delimiting at the bottom an inlet opening provided in a front wall of said container.

The coupling member preferably has a gripping cross member extending between one pair of arms respectively parallel, rotatably bound around the hinging axis.

In the rest position, the coupling member preferably hangs, due to gravity, away from the hinging axis, below the load threshold.

In the work position, the coupling member is preferably raised in relation to the hinging axis, with the gripping cross member above the load threshold.

Additional features and advantages will appear more clearly from the detailed description of a preferred, but not exclusive, embodiment, of a collapsible coupling device for roll-off containers, in accordance with this invention. This description will be outlined below with reference to the attached drawings, provided only as a guideline, and therefore nonlimiting, wherein:
Figure 1 shows, in perspective view, a roll-off container equipped with a coupling device according to this invention;
Figure 2 shows an enlarged detail of Figure 1, highlighting the coupling member in a rest position;
Figure 3 shows the detail in Figure 2, with the coupling member in a work position;
Figure 4 shows, in side view, the raising device with the coupling member in an intermediate position between the rest position and the work position.

With reference to the figures cited, the reference number 1 indicates, as a whole, a collapsible coupling device for roll-off containers, in accordance with this invention. The coupling device 1 equips a roll-off container indicated, overall, with the reference number 2, designed for waste collection. The device 1 is preferably mounted on a front wall 3 of the container 2, against which there is a loading chamber 4 wherein waste is conveyed that is manually deposited by citizens and/or staff in charge of the collection service, manually and/or by overturning a service vehicle tipper.

In the example illustrated, the loading chamber 4 is accessible through an inlet opening 5 arranged in the front wall 3 and, preferably, provided with one or more access doors 6. The inlet opening 5 is delimited below by a load threshold 7. In possible embodiments, the loading chamber 4 may be directly accessible from above.

In the loading chamber 4, a compaction system 8 may operate, which is not described in detail as it can be produced in various known ways, basically comprising at least one pusher that can be activated electrically and/or hydraulically with alternating motion, to transfer waste delivered to the loading chamber 4 to a compaction compartment 9. The compaction compartment 9 preferably occupies a majority of the internal volume of the container 2, beginning from a partition 10 placed to delimit the loading chamber 4 until a back wall 11 opposite the front wall 3.

The device 1 comprises at least one coupling member 12 rotatably engaged in relation to a frame or other supporting structure 13 of the container 2. In the example illustrated, the coupling member 12 has a gripping cross member 14 extending between a pair of arms 15 respectively parallel, rotatably bound to respective fastening brackets 16 integral with the supporting structure 13. Each of the fastening brackets 16 may comprise a pair of plates that are reciprocally parallel, placed on the opposite sides of the respective arm 15 bound to them via a concentric hinging pin 17 to a horizontal hinging axis (X).

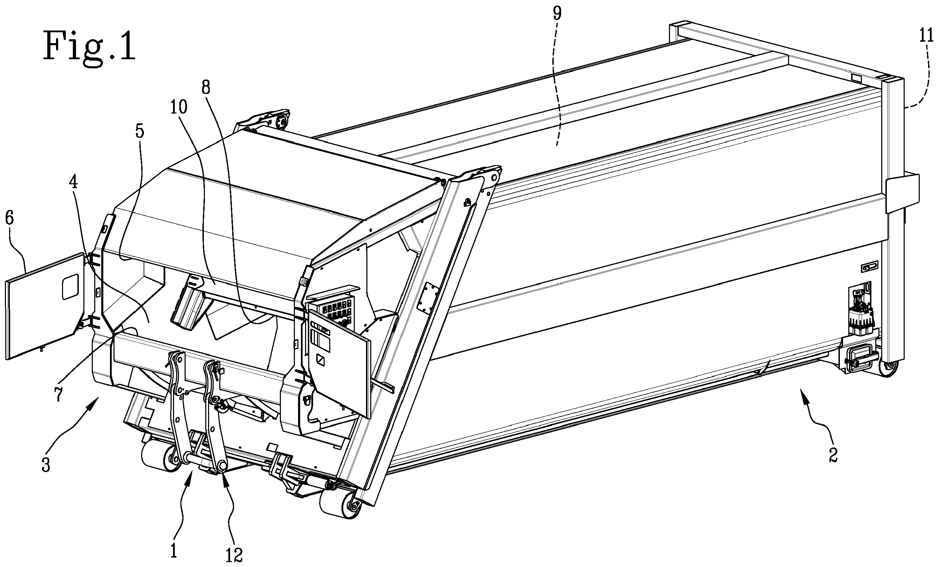

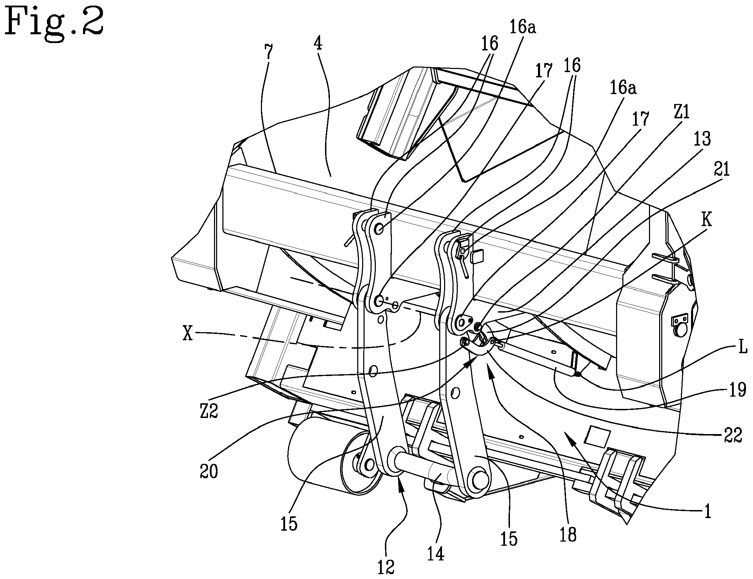

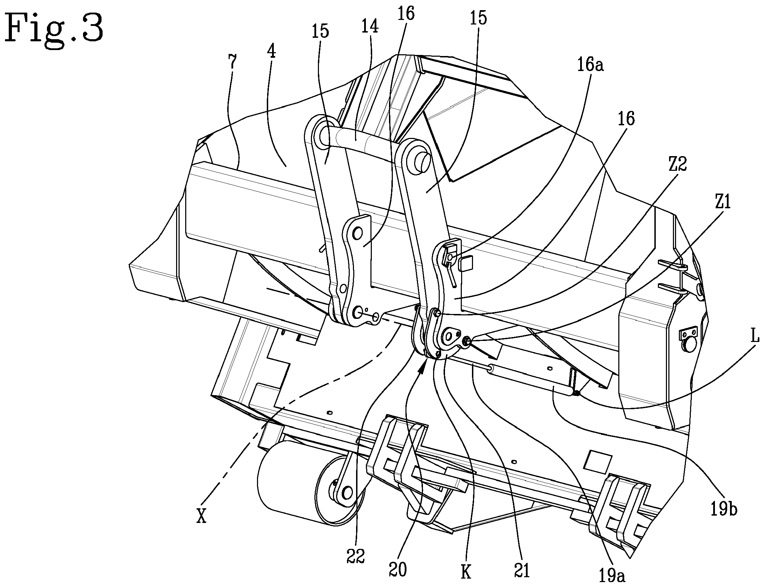

The coupling member 12 is moveable, free to rotate around the hinging axis (X), between a rest position wherein it is lowered as in Figures 1 and 2, and a work position in which it is raised, as in Figure 3. In the rest position, the coupling member 12 hangs, due to gravity, from the respective hinging pins 17, below the load threshold 7. In the work position, the coupling member 12 is raised in relation to the hinging axis (X), so that the gripping cross member 14 is elevated in relation to the load threshold 7 and positioned at a prefixed level from the ground, suitable for engaging the coupling member 1 by a mechanical arm or another loading device (not illustrated) installed on a vehicle equipped for taking and transporting the roll-off container 2.

One or more locking pins 16a may be provided, which can be slidably inserted through the brackets 16 and through the arms 15 to restrain the hook in the work position, as in Figure 3.

The coupling device 1 also comprises at least one pusher device 18 operating between the supporting structure 13 and the coupling member 12 to push the latter towards the work position.

The pusher device 18 may, for example, comprise an elastic element 19, for example a gas spring comprising a shaft 19a supporting a piston longitudinally moveable inside a pressurised cylinder 19b. Alternatively, the pusher device 18 may comprise a different spring: a compression one, traction one, torsion one, or another kind.

The pusher device 18 preferably operates on the coupling member 12 via an idler lever mechanism 20.

The idler lever mechanism 20 is operationally bound between the coupling member 12 and the supporting structure 13, may be conveniently configured to transmit a raising force, which is no greater than a lowering force determined by the weight of the coupling member 12, to the coupling member 12, as a result of the pusher device 18, so as to preserve a spontaneous parking of the latter in the rest position, despite the action exerted by the pusher device 18.

To this end, it may be provided that the pusher lever mechanism 20 comprises a pair of levers 21, 22 reciprocally bound around an articulation axis K. More specifically, they are preferably provided with a first lever 21 bound to the supporting structure 13, at a first pivoting axis Z1, and a second lever 22, bound to the coupling member 12 at a second pivoting axis Z2.

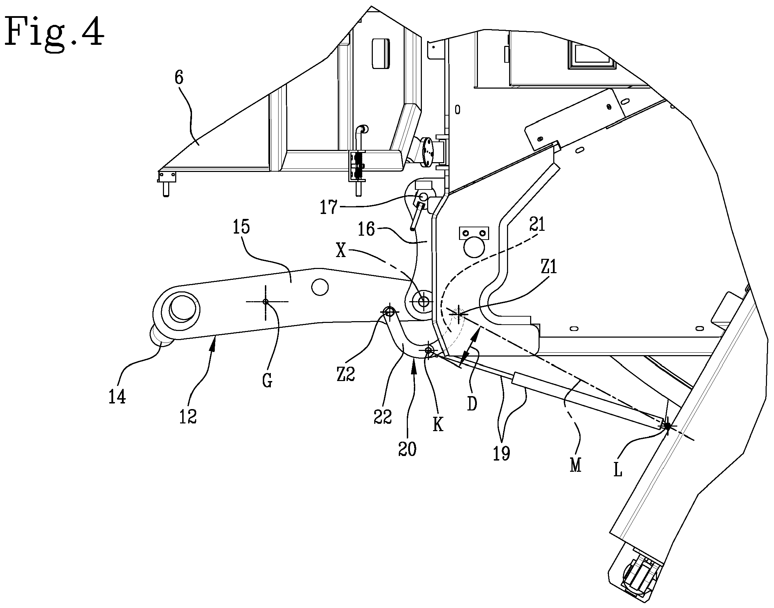

One or both of the levers 21, 22 of the thrust lever mechanism 20 may have an arched development, so as to lend itself to extending around the hinging pin 17 without interfering with it in the work position, as in Figure 3. The gas spring or other elastic element 19 may conveniently operate at the articulation axis K via one end of the shaft 19a, favouring its structural simplification and cost. The opposite end of the pressurised cylinder 19b is hinged to the supporting structure 13 at one attachment axis L. It may, conveniently, be provided that, upon reaching the rest position, the articulation axis K moves slightly beyond an alignment direction M (Figure 4) between the attachment axis L and the first pivoting axis Z1, so that the action of the gas spring or other elastic element 19 restrains the coupling member 12 in the rest position.

During the manual shifting of the coupling member 12 from the rest position, the distance D of the articulation axis K from the alignment direction M represents the action arm with which the force exerted by the elastic element 19 is expressed.

In an initial phase of the manual movement of the coupling member 12 from the rest position, this action arm is nothing or modest, gradually growing until reaching a maximum value D when the coupling member 12 brings its centre of gravity G in basic horizontal alignment with respect to the hinging axis X (Figure 3). When this condition of horizontal alignment is exceeded, the distance D of the articulation axis K from the alignment direction M, and thus the action arm, progressively starts reducing again.

This circumstance ensures that the action of the gas spring 19 expresses its maximum effect when the force required to raise the coupling member 12 towards the work position is the maximum. The effect of the action exerted by the gas spring 19 tends, instead, to be reduced progressively, bit by bit, as the centre of gravity G of the coupling member 12 draws near to a condition of vertical alignment, in relation to the hinging axis (X). In other words, the action of the pusher device 18 is such as to effectively attenuate, and make basically uniform, the manual force required to move the coupling member 12 from the rest position to the work position.

## Claims

1. A collapsible coupling device for roll-off containers, suited for engagement with a loading device installed on a motor vehicle, comprising;
a coupling member (12) suitable to be rotatably engaged with respect to a supporting structure (13) of a roll-off container (2), and movable around a horizontal hinging axis (X) between a rest position in which it is lowered and a work position in which it is raised;
**characterized by** further comprising:
a pusher device (18) suitable to be operating between the supporting structure (13) and the coupling member (12) to push the latter towards the work position.

2. The device according to claim 1, wherein the pusher device (18), operates on a thrust lever mechanism (20) suitable to be operatively constrained between the coupling member (12) and the supporting structure (13).

3. The device according to claim 2, wherein the thrust lever mechanism (20) is configured to transmit on the coupling member (12), upon effect of the pusher device (18), a lifting force not exceeding a lowering force determined by the weight of the coupling member (12).

4. The device according to claim 2 or 3, wherein the thrust lever mechanism (20) comprises a pair of levers (21, 22) mutually constrained around an articulation axis (K).

5. The device according to claim 4, wherein said pair of levers (21, 22) comprises a first lever (21) suitable to be constrained to the supporting structure (13), and a second lever (22) constrained to the coupling member (12).

6. The device according to claim 4 or 5, wherein the pusher device (18) operates at the articulation axis (K).

7. The device according to claim 5 or 6, wherein upon reaching the rest position of the coupling member (12), the articulation axis (K) passes across an alignment direction (M) between an attachment axis (L) of the pusher device (18) on the supporting structure (13) and a pivoting axis (Z1) of the first lever (21) on the supporting structure (13).

8. The device according to claim 7, wherein the articulation axis (K) reaches a maximum distance (D) from the alignment direction (M) when the coupling member (12) brings its own centre of gravity (G) in substantial horizontal alignment with respect to the hinging axis (X).

9. The device according to one or more of the preceding claims, wherein the coupling member (12) is suitable to be hinged to at least one fastening bracket (16) integral with the supporting structure (13).

10. The device according to one or more of the preceding claims, wherein the coupling member (12) is hinged close to a load threshold (7), delimiting at the bottom an inlet opening (5) provided in a front wall (3) of said container (2).

11. The device according to claim 2 or claim 2 and one or more of the preceding claims wherein the pusher device (18) comprises an elastic element (19).

12. The device according to one or more of the preceding claims, wherein the coupling member (12) has a gripping cross member (14) extending between a pair of respectively parallel arms (15), rotatably bound around the hinging axis (X).

13. The device according to claim 10 or claim 10 and one or more of claims 10 to 13 wherein, in the rest position, the coupling member (12) hangs by gravity away from the hinging axis (X), below the load threshold (7).

14. The device according to claim 12 or claim 12 and one or more of claims 10 to 14 wherein, in the work position, the coupling member (12) is raised with respect to the hinging axis (X), with the gripping cross member (14) above the load threshold (7).

15. A roll-off container, comprising a collapsible coupling device according to one or more of the preceding claims.

## Patentansprüche

1. Zusammenklappbare Kupplungsvorrichtung für Abrollcontainer, die für den Eingriff in eine auf einem Motorfahrzeug installierte Ladevorrichtung geeignet ist, umfassend:
ein Kupplungsglied (12), das geeignet ist, im Verhältnis zu einer tragenden Struktur (13) eines Abrollcontainers (2) drehbar in Eingriff gebracht zu werden und um eine horizontale Scharnierachse (X) zwischen einer Ruheposition, in der es gesenkt ist, und einer Arbeitsposition, in der es angehoben ist, bewegt werden kann;
**dadurch gekennzeichnet, dass** es außerdem Folgendes umfasst:
eine Schiebevorrichtung (18), die geeignet ist, zwischen der tragenden Struktur (13) und dem Kupplungsglied (12) zum Einsatz zu kommen, um Letzteres in Richtung der Arbeitsposition zu schieben.

2. Vorrichtung nach Anspruch 1, wobei die Schiebevorrichtung (18) auf einen Schubhebelmechanismus (20) wirkt, der geeignet ist, operativ zwischen dem Kupplungsglied (12) und der tragenden Struktur (13) zurückgehalten zu werden.

3. Vorrichtung nach Anspruch 2, wobei der Schubhebelmechanismus (20) darauf ausgelegt ist, durch Wirkung der Schiebevorrichtung (18) eine Hubkraft auf das Kupplungsglied (12) zu übertragen, die eine von dem Gewicht des Kupplungsglieds (12) bestimmte Senkkraft nicht übersteigt.

4. Vorrichtung nach Anspruch 2 oder 3, wobei der Schubhebelmechanismus (20) ein Paar Hebel (21, 22) umfasst, die sich gegenseitig um eine Gelenkachse (K) herum halten.

5. Vorrichtung nach Anspruch 4, wobei das genannte Paar Hebel (21, 22) einen ersten Hebel (21) umfasst, der geeignet ist, an der tragenden Struktur (13) gehalten zu werden, und einen zweiten Hebel (22), der an dem Kupplungsglied (12) gehalten wird.

6. Vorrichtung nach Anspruch 4 oder 5, wobei die Schiebevorrichtung (18) an der Gelenkachse (K) wirkt.

7. Vorrichtung nach Anspruch 5 oder 6, wobei beim Erreichen der Ruheposition des Kupplungsglieds (12) die Gelenkachse (K) entlang einer Fluchtungsrichtung (M) zwischen einer Anbringungsachse (L) der Schiebevorrichtung (18) an der tragenden Struktur (13) und einer Schwenkachse (Z1) des ersten Hebels (21) an der tragenden Struktur (13) verläuft.

8. Vorrichtung nach Anspruch 7, wobei die Gelenkachse (K) einen maximalen Abstand (D) von der Fluchtungsrichtung (M) erreicht, wenn das Kupplungsglied (12) seinen Schwerpunkt (G) in im Wesentlichen horizontale Ausrichtung im Verhältnis zu der Scharnierachse (X) bringt.

9. Vorrichtung nach einem oder mehreren der vorangegangenen Ansprüche, wobei das Kupplungsglied (12) geeignet ist, an mindestens einer Befestigungshalterung (16) angelenkt zu werden, die in die tragende Struktur (13) integriert ist.

10. Vorrichtung nach einem oder mehreren der vorangegangenen Ansprüche, wobei das Kupplungsglied (12) in der Nähe einer Ladeschwelle (7) angelenkt ist, die unten eine in der Frontwand (3) des genannten Containers (2) eingerichtete Eingangsöffnung (5) begrenzt.

11. Vorrichtung nach Anspruch 2 oder nach Anspruch 2 und einem oder mehreren der vorangegangenen Ansprüche, wobei die Schiebevorrichtung (18) ein Federelement (19) umfasst.

12. Vorrichtung nach einem oder mehreren der vorangegangenen Ansprüche, wobei das Kupplungsglied (12) ein querliegendes Greifglied (14) aufweist, das zwischen einem Paar entsprechender paralleler Arme (15) verläuft, die drehbar um die Scharnierachse (X) befestigt sind.

13. Vorrichtung nach Anspruch 10 oder nach Anspruch 10 und einem oder mehreren der Ansprüche 10 bis 13, wobei, in der Ruheposition, das Kupplungsglied (12) durch Schwerkraft von der Scharnierachse (X) entfernt, unter der Ladeschwelle (7) hängt.

14. Vorrichtung nach Anspruch 12 oder nach Anspruch 12 und einem oder mehreren der Ansprüche 10 bis 14, wobei in der Arbeitsposition das Kupplungsglied (12) im Verhältnis zu der Scharnierachse (X) erhoben ist und das querliegende Greifglied (14) sich über der Ladeschwelle (7) befindet.

15. Abrollcontainer, umfassend eine zusammenklappbare Kupplungsvorrichtung nach einem oder mehreren der vorangegangenen Ansprüche.

## Revendications

1. Dispositif d'accouplement repliable pour conteneurs roulants, adapté à l'engagement avec un dispositif de chargement installé sur un véhicule automobile, comprenant ;
un élément d'accouplement (12) adapté pour être engagé de manière rotative par rapport à une structure de support (13) d'un conteneur roulant (2), et déplaçable autour d'un axe d'articulation horizontal (X) entre une position de repos dans laquelle il est abaissé et une position de travail dans laquelle il est soulevé ;
**caractérisé en ce qu'**il comprend en outre :
un dispositif poussoir (18) adapté pour fonctionner entre la structure de support (13) et l'élément d'accouplement (12) pour pousser ce dernier vers la position de travail.

2. Dispositif selon la revendication 1, dans lequel le dispositif poussoir (18), fonctionne sur un mécanisme de levier de poussée (20) adapté pour être contraint de manière opérationnelle entre l'élément d'accouplement (12) et la structure de support (13).

3. Dispositif selon la revendication 2, dans lequel le mécanisme de levier de poussée (20) est configuré pour transmettre sur l'élément d'accouplement (12), sous l'effet du dispositif poussoir (18), une force de levage n'excédant pas une force d'abaissement déterminée par le poids de l'élément d'accouplement (12).

4. Dispositif selon la revendication 2 ou 3, dans lequel le mécanisme de levier de poussée (20) comprend une paire de leviers (21, 22) contraints mutuellement autour d'un axe d'articulation (K).

5. Dispositif selon la revendication 4, dans lequel ladite paire de leviers (21, 22) comprend un premier levier (21) adapté pour être contraint à la structure de support (13), et un second levier (22) contraint à l'élément d'accouplement (12).

6. Dispositif selon la revendication 4 ou 5, dans lequel le dispositif poussoir (18) fonctionne au niveau de l'axe d'articulation (K).

7. Dispositif selon la revendication 5 ou 6, dans lequel après avoir atteint la position de repos de l'élément d'accouplement (12) l'axe d'articulation (K) passe à travers une direction d'alignement (M) entre un axe de fixation (L) du dispositif poussoir (18) sur la structure de support (13) et un axe de pivotement (Z1) du premier levier (21) sur la structure de support (13).

8. Dispositif selon la revendication 7, dans lequel l'axe d'articulation (K) atteint une distance maximale (D) à partir de la direction d'alignement (M) lorsque l'élément d'accouplement (12) amène son propre centre de gravité (G) dans un alignement horizontal substantiel par rapport à l'axe d'articulation (X).

9. Dispositif selon l'une ou plusieurs des revendications précédentes, dans lequel l'élément d'accouplement (12) est adapté pour être articulé à au moins un support de fixation (16) solidaire de la structure de support (13).

10. Dispositif selon l'une ou plusieurs des revendications précédentes, dans lequel l'élément d'accouplement (12) est articulé près d'un seuil de chargement (7), délimitant en bas une ouverture d'entrée (5) prévue dans une paroi avant (3) dudit conteneur (2).

11. Dispositif selon la revendication 2 ou la revendication 2 et l'une ou plusieurs des revendications précédentes, dans lequel le dispositif poussoir (18) comprend un élément élastique (19).

12. Dispositif selon l'une ou plusieurs des revendications précédentes, dans lequel l'élément d'accouplement (12) a un élément transversal de préhension (14) s'étendant entre une paire de bras respectivement parallèles (15), lié de manière rotative autour de l'axe d'articulation (X).

13. Dispositif selon la revendication 10 ou la revendication 10 et l'une ou plusieurs des revendications 10 à 13, dans lequel, dans la position de repos, l'élément d'accouplement (12) pend par gravité loin de l'axe d'articulation (X), en dessous du seuil de chargement (7).

14. Dispositif selon la revendication 12 ou la revendication 12 et l'une ou plusieurs des revendications 10 à 14, dans lequel, dans la position de travail, l'élément d'accouplement (12) est soulevé par rapport à l'axe d'articulation (X), avec l'élément transversal de préhension (14) au-dessus du seuil de chargement (7).

15. Conteneur roulant, comprenant un dispositif d'accouplement repliable selon l'une ou plusieurs des revendications précédentes.
